# EUROPEAN PATENT SPECIFICATION

(11) **EP 2 020 546 B1**
(45) Date of publication and mention of the grant of the patent: **29.06.2011**
(21) Application number: 07015042.0
(22) Date of filing: 31.07.2007
(51) Int. Cl.: F16K 7/10

(54) **Excess flow valves**
Ausflussventile
Clapets de retenue

(43) Date of publication of application: 04.02.2009
(73) Proprietor: UMAC Incorporated, Malvern PA 19355-1234 (US)
(72) Inventor: Mackay-Smith, Seth W., Coatesville PA 19320 (US); McGowan, C. Dean, Malvern PA 19355 (US)
(74) Representative: Becker Kurig Straus

(56) References cited:
- EP-A- 1 388 697
- FR-A- 2 794 841
- US-A- 5 551 476

## Description

### BACKGROUND OF THE INVENTION

### Field of the Invention

The present invention relates to an excess flow valve (EFV), an installation equipment relating thereto and a method for installing the excess flow valve into an existing gas service line.

### Prior Art

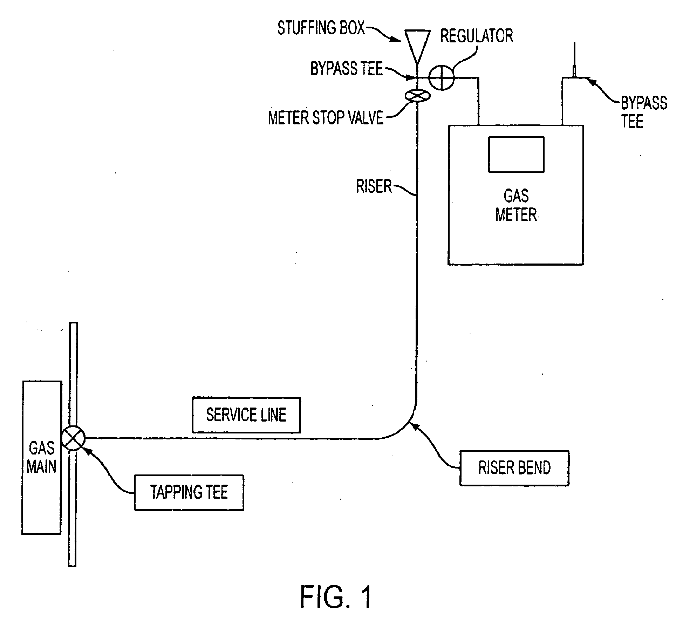

Conventional combustible gas distribution systems bring gas from a street main below ground level, through a tapping tee, a service line, a riser above ground level, a meter cock, a regulator, a meter and then into the customer's structure. An example of such system is shown in Fig. 1.

Rupture of the line or failure of fittings between the consumer property line and the served customer structure can occur for any number of reasons. Among these are digging by the customer or other party, vehicular impact, ground settling, failure of a regulator, failure of a meter, failure of fittings and earthquakes. Rupture of the line or failure of fittings can also occur on the inside customer fuel gas piping or flexible connection. Dangerous explosive conditions can arise when any such rupture occurs.

Prior art patents show various structures for shutting off the gas flow when the flow exceeds a predetermined value, e.g. due to the downstream rupture. Excess flow valves are used in the natural gas industry to prevent explosive pipeline gases such as natural gas, propane, methane, coal gas, town gas, etc. from escaping when a pipe is ruptured. These safety valves will remain open during normal use, when there is backpressure downstream from the valve, but will trip (snap shut) when the downstream pressure disappears. This prevents fires and explosions when gas lines are ruptured.

In operation, the stem of a conventional EFV such as that shown in USP 5,551,476 is spring biased opposite to the direction of gas flow. Under normal conditions the poppet on the stem is held away from a valve seat by the bias spring. When the flow is excessive such as when the service line ruptures downstream of the EFV, the forces from the flowing fluid overcome the spring bias and the poppet closes against the seat, shutting off the flow. Thus, the dangerous flow of combustible gas is stopped.

Presently, in order to install an EFV in an existing service line a hole or trench must be dug, the service line pressure must be reduced to zero, and the service line must be cut. This is not only expensive, time consuming, and disruptive to customers and traffic flows, it is also impractical in terms of the human resources required.

The main technology barriers to retrofitting EFVs without digging have been the actual anchoring of the device in the service line. The anchoring of the device has been an issue since it is unacceptable to damage or otherwise alter the interior wall of the service piping. The method of insertion has been an issue because the valves and fittings attached to the meter set have unpredictable geometry and the bend in the service riser presents a constraint in terms of the length of the EFV and the rigidity of the installation tool.

Closest prior art EP-A-1 388 697 discloses a safety device for insertion into a pipeline in which fluid circulates in an upstream and a downstream direction, comprising a tube that provides the fluid with a central circulatory passage regulated by a central valve that closes in the event of an excessive flow of this fluid. There is an annular valve closure member which is elastically malleable, mounted to the external periphery of the tube, and provides the fluid with a peripheral circulatory passage which it selectively obstructs by subjecting a radial expansion in the event of an excessive flow of fluid.

FR-A-2 794 841 discloses an automatic flow-limiting safety valve comprises a rigid core with an envelope which inflates when excessive flow causes a pressure drop exceeding a specified limit. The rigid core is connected to retainers and also supports an inflatable envelope. The lateral wall partially delimits an internal chamber. It also faces the internal wall of the pipe. The admission valve is calibrated to admit fluid selectively at the upstream end of the chamber, permitting envelope inflation, when the pressure drop exceeds a given threshold. The inflatable envelope blocks the pipe selectively and at least partially, by radial displacement of its sidewall towards the internal wall of the pipe.

### Object and Summary of the Invention

The object of the present invention is directed to a unique EFV and installation equipment engaged to the EFV during its installation which together overcome the deficiencies and problems in the prior art discussed above.
This is solved by the excess flow valve of the present invention according to claim 1, wherein the inventive excess flow valve adapted to be installed in a service line of a natural gas distribution system serving an existing facility, comprises:
a cylindrical housing having a portion with a first length and a portion with a second length and a through hole extending therethrough for passage therethrough of gas. The EFV being engaged in said through hole of said first length and an expandable tubular wall forms a portion of the second length of the cylindrical housing, wherein the expandable tubular wall being adapted to and capable of anchoring the EFV and the cylindrical housing within the service line when the expandable tubular wall has been expanded within the service line. The EFV and the cylindrical housing are free of any other means to anchor the cylindrical housing within the service line. When said expandable tubular wall is expanded in an annular configuration in the service line, the EFV and the cylindrical housing are fixed and permanently left in the service line to seal the service line for the passage of gas therethrough except through the EFV from the time of initial installation of the cylindrical housing with the EFV therewithin.

Additionally, said problems of prior art are solved by the present invention according to claim 6, providing an installation equipment for fixing and leaving an excess flow valve device in a service line of a natural gas distribution system serving an existing facility, wherein the excess flow valve device has a passageway for passage of gas therethrough, the excess flow valve being engaged in a through hole of a first length of a cylindrical housing, and the cylindrical housing having an expandable tubular wall forming a part of a second length thereof, the expandable tubular wall of the housing being capable of being expanded and fixed within the service line, characterized in that the installation equipment comprises a mandrel, fluid line and hydraulic pump which are all engaged together to deliver fluid under pressure to said mandrel.

Additionally, the present invention a discloses a method according to claim 11 for installing an excess flow valve in a service line of a natural gas distribution system serving an existing structure, wherein the excess flow valve has a passageway for passage of gas therethrough, the excess flow valve being engaged in a through hole of a first length of a cylindrical housing, and the cylindrical housing having an expandable tubular wall forming a part of a second length thereof, the expandable tubular wall of the housing being capable of being expanded and fixed within the service line, the method comprising forcing the cylindrical housing with the excess flow valve therewithin into the service line of the natural gas distribution system serving an existing structure; and causing the expandable tubular wall forming part of the second length of the cylindrical housing to expand so as to firmly frictionally engage the interior wall of the service line.

The compatible EFV and installation equipment provides a new solution for retrofitting EFVs in service lines that involves no digging, thereby causing far less disruption to the community. The installation is effected from the customer meter set, using a hydraulically expandable element integral with the EFV that anchors the EFV inside the existing service line by the force of an interference fit.

The engaged EFV and compatible installation equipment provides an external geometry that is initially smaller in diameter than that of the inner diameter of the service line in which the EFV is to be installed. This permits passage of the EFV through the service line and its appurtenances to the point of installation without damage.

When the EFV has been inserted to a predetermined point in the service line, it can be expanded to the diameter needed for secure anchoring. The EFV is made of a material that allows for enough expansion to anchor the EFV without cracking, splitting, or otherwise deforming in an irregular manner. Put simply, this portion of the EFV is blown up like a balloon.

The method for the actual hydraulic expansion is and has been for some time in the public domain in the form of a method of power plant steam turbine condenser tube sleeving (repair), however the concept for using this for anchoring an EFV is entirely new and constitutes a secondary component of this original idea and application.

The installation equipment consists of a hydraulic pump, a flexible water line, and a mandrel that slides into the unique hydraulically expandable element of the EFV. The anchoring force, measured by a pressure gauge on the installation equipment, is high enough that the mandrel can simply be pulled out of the EFV when the expansion cycle is finished.

Thus, the features of the EFV according to the invention in cooperation with its installation equipment are intended to permit a user to:
(1) Retrofit the EFV in the customer's meter piping while the service line remains pressurized.
(2) Insert the EFV through the service line up to the tee that is attached to the gas main, and
(3) Use hydraulic pressure to expand a specific portion of the EFV so as to contact the inside of the service line and lock the EFV in place.

Though the device is metal, its design would be such that the metal expands much like a balloon under the applied pressure. This would have the further benefit of insuring that no sharp edges are in contact with a plastic service line.

As indicated above, installation equipment consists of a hydraulic pump, a flexible water line and a mandrel that slides into engagement with the hydraulically expandable element of the EFV. The anchoring force, measured by a pressure gauge on the installation equipment, indicates when the expandable element has expanded to contact the service line. Thereafter, the mandrel can be withdrawn out of the EFV when the expansion cycle has ended.

### Brief Description of the Drawings

The present invention will be more apparent from the following detailed description of an embodiment taken in conjunction with the following drawings, wherein:
FIG. 1 : shows a conventional natural gas distribution system;
FIG. 2 : shows an elevation view of the EFV according to the invention before its use;
FIG. 3 : shows a cross-sectional view along section line 3- 3 of Fig. 2;
FIG. 4 : shows an elevation view of the mandrel, fluid line and hydraulic pump;
FIG. 5 : shows an elevation view of the mandrel and fluid line of Fig. 4 inserted into the EFV of Fig. 2 in the service line prior to engagement of the EFV in the service line;
FIG. 6 : shows the EFV of Fig. 5 expanded into engagement with the service line;
FIG. 7 : shows the mandrel and fluid line of Fig. 6 withdrawn from the expanded EFV of Fig. 6, and
FIG. 8 : shows a cross-sectional view along section line 8- 8 of Fig. 6 with the service line not shown.

### Detailed Description of the Preferred Embodiment of the Invention

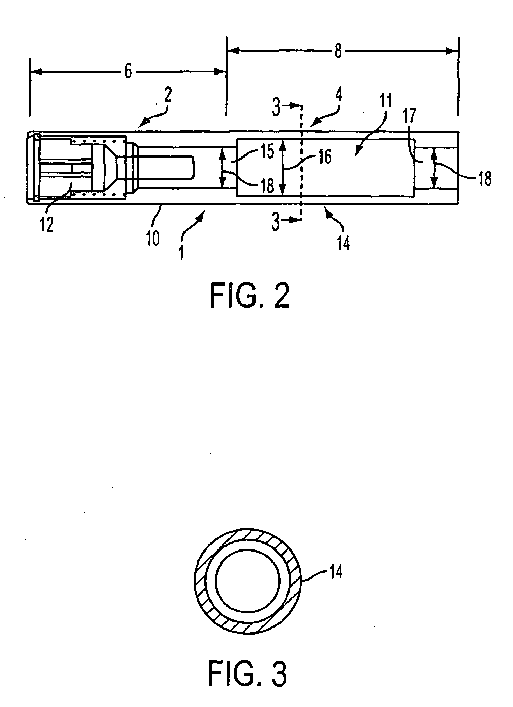

EFV 1 shown in Fig. 2 is intended for installation in an existing conventional natural gas service system such as that shown in Fig. 1 to prevent escaping gas entering the home of a customer from a ruptured gas line downstream from the gas meter. The distribution system of Fig. 1 is shown connected between a tapping tee on a gas main and a gas meter located in the home of the customer. The service line shown in the system is normally buried after these connections have been made.

Installation of the EFV 1 is accomplished by inserting it through the bypass tee shown in Fig. 1 on the inlet side of the gas meter and fixing it to the inner wall of the gas pipe which extends to the gas main. Insertion under pressure is accomplished by way of a "stuffing box", a conventional device that consists of a sealed chamber which is attached to the bypass tee and allows control of a sliding rod or cable (not shown). One end of the rod or cable is outside of the stuffing box, allowing direct control by the operator while the opposite end is sealed inside the pressurized system. The seal is maintained via a gland nut and elastomer that compresses around the rod or cable when the nut is tightened. Such a device is well known within the industry and accordingly not an inventive feature of the claimed invention. The progression of drawings from Fig. 2 through Fig. 8 illustrates the structural components and steps involved in the installation of EFV 1 in such gas pipes and removal of the installation equipment after the installation.

As shown in Fig. 2, EFV 1 has a continuous cylindrical housing 10 made preferably of metal that has the same outer diameter throughout its length and a through hole 11 that has inner diameters over selected lengths of the housing 10 which are different from each other so as to support the different functions of housing portions 2, 4 of housing 10 discussed below.

Portion 2 extends over a length 6 of cylindrical housing 10 and houses conventional hardware 12 similar to that shown in USP 5,551,476 to control the opening and closing of an EFV valve therein. As hardware 12 is not an inventive feature of the present invention, it will not be addressed further.

Portion 4 extends over a length 8 of cylindrical housing 10 and is integrally formed as a unit with portion 2. Located within the length 8 of portion 4 is a laterally expandable wall 14. The inner diameter 16 of through hole 11 over the length of wall 14 is larger than inner diameter 18 located at opposite ends 15, 17 of portion 4. Thus, expandable wall 14 is thinner and more flexible than the wall of housing 10 located at opposite ends of portion 4.

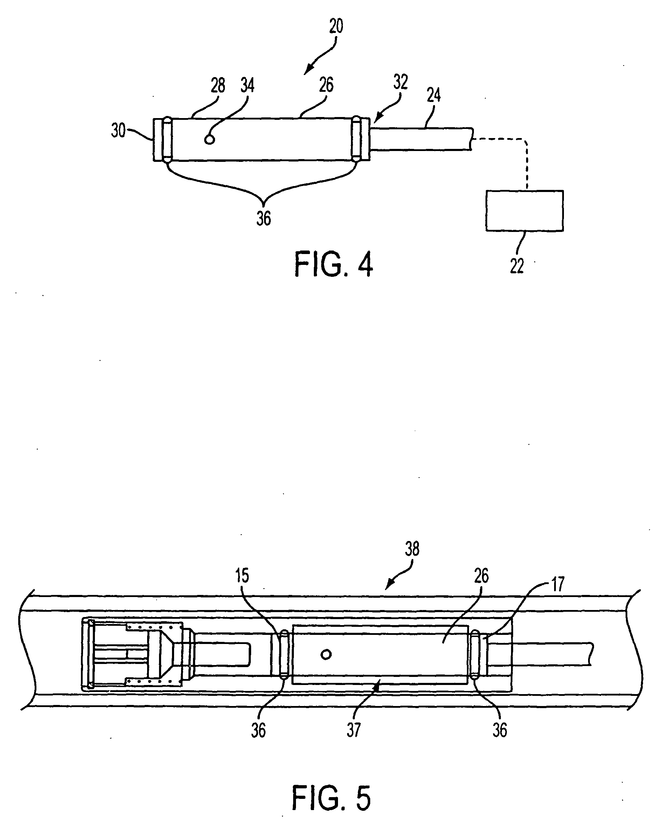

Fig. 4 shows the installation equipment 20 which serves to locate and fix EFV 1 at a predetermined position in the service line downstream from the customer's gas meter. This equipment consists of a hydraulic pump 22, flexible fluid line 24, and a mandrel 26 designed for sealed engagement with opposite ends 15, 17 of portion 4.

Mandrel 26 comprises a cylindrical housing 28 a closed first end 30 and a second end 32 having an inlet engaged to an end of fluid line 24. The other end of fluid line 24 is engaged to hydraulic pump 22.

Housing 26 is closed with the exception of fluid outlet hole 34 and the inlet in its second end 32. Finally, elastic O-rings 36 are fixed to housing 26 near opposite ends 30, 32 so as to be spaced apart substantially the same distance as opposite ends 15, 17 of portion 4 of EFV 1.

Retrofitting EFV 1 into an existing gas service line begins with inserting mandrel 26 into EFV 1 as shown in Fig. 5 so that O-rings 36 are respectively engaged to opposite ends 15, 17 of portion 4 to seal mandrel 26 in portion 4. This engagement creates an annular sealed space 37 and confined between mandrel 26 expandable wall 14. After mandrel 26 is engaged in EFV 1, they can be easily inserted into service line 38 as shown in Fig. 5 since the outer diameter of the engaged EFV 1 and mandrel 26 are smaller than that of the inner diameter of service line 38. The engaged EFV 1 and mandrel 26 can then be moved to a predetermined position in service line 38 by manipulation of flexible fluid line 24.

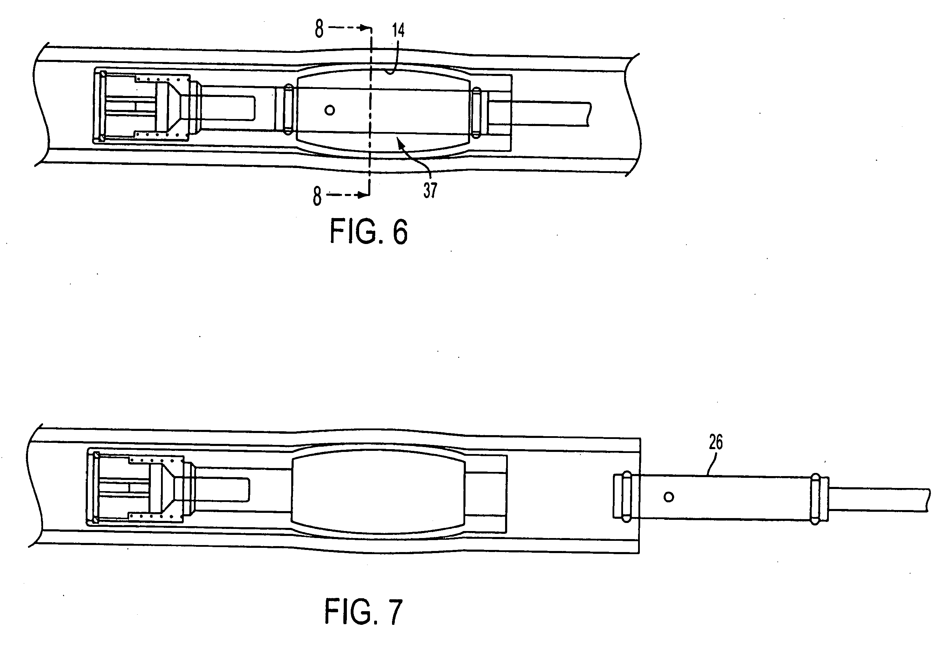

After the engaged EFV 1 and mandrel 26 have reached the selected position in service line 38, an operator can initiate operation of hydraulic pump 22 to force fluid through fluid line 24 into mandrel 26 and out fluid outlet hole 34 into sealed space 37. The pressure created by the influx of fluid into sealed and confined space 37 results in the lateral expansion of expandable wall 14 into fixed engagement with the inner wall of service line 38 as shown in Fig. 6.

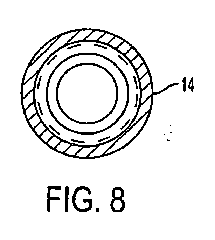

Figs. 3 and 8 respectively show cross-sections of annular expandable wall 14 before and after its expansion by the fluid pressure created by hydraulic pump 22 in annular space 37.

After the operator is satisfied that EFV 1 has been successfully fixed in service line 38 by engagement of expandable wall 14 against the inner wall of service line 38 as shown in Fig. 6, the hydraulic pump 22 is turned off. This permits removal of mandrel 26 from the EFV 1 engaged in the service line by withdrawing the fluid line from the service line.

## Claims

1. An excess flow valve (EFV) (1) adapted to be installed in a service line (38) of a natural gas distribution system serving an existing facility, said EFV comprising:
a cylindrical housing (10) having a portion (2) with a first length (6) and a portion (4) with a second length (8) and a through hole (11) extending therethrough for passage therethrough of gas;
the EFV being engaged in said through hole (11) of said first length (6); **characterised by** said EFV further comprising
an expandable tubular wall (14) forming a portion of the second length (8) of the cylindrical housing (10);
wherein the expandable tubular wall (14) being adapted to and capable of anchoring the EFV and the cylindrical housing (10) within the service line when the expandable tubular wall (14) has been expanded within the service line;
wherein the EFV and the cylindrical housing (10) being free of any other means to anchor the cylindrical housing (10) within the service line;
wherein when said expandable tubular wall (14) is expanded in an annular configuration in the service line, the EFV and the cylindrical housing (10) are fixed and permanently left in the service line to seal the service line for the passage of gas therethrough except through the EFV from the time of initial installation of the cylindrical housing (10) with the EFV therewithin.

2. The excess flow valve (1) according to claim 1, wherein said first length (6) and said second length (8) are integrally formed together as a unit.

3. The excess flow valve (1) according to claims 1 or 2, wherein an annular wall at each end of said second length (8) of said EFV housing is thicker than the expandable wall between the ends of said second length (8).

4. The excess flow valve (1) of claim 1 wherein said tubular wall is formed of metal.

5. The excess flow valve (1) according to any of claims 1-4 when used in situ within the service line, with said tubular wall being expanded in the service line whereby the EFV is able to be fixed and left in place.

6. Installation equipment (20) for fixing and leaving an excess flow valve device (1) in a service line (38) of a natural gas distribution system serving an existing facility, wherein the excess flow valve device (1) has a passageway for passage of gas therethrough, the excess flow valve (1) being engaged in a through hole (11) of a first length (6) of a cylindrical housing (10), and the cylindrical housing (10) having an expandable tubular wall (14) forming a part of a second length (8) thereof, the expandable tubular wall (14) of the housing (10) being capable of being expanded and fixed within the service line (38), **characterized in that**
the installation equipment comprises a mandrel (26), fluid line (24) and hydraulic pump (22) which are all engaged together to deliver fluid under pressure to said mandrel (26).

7. The installation equipment (20) according to claim 6, wherein the mandrel (26) includes a cylindrical housing (28) engaged to the fluid line (24), said mandrel housing (28) having a pair of O-rings (36) respectively fixed at opposite ends thereof and a fluid outlet hole (34) located between the O-rings (36).

8. The installation equipment (20) according to claim 7, wherein said O-rings (36) of the mandrel (26) are respectively fixed against the annular wall (14) at each end of the second length (8) so as to form a space between the expandable wall (14) and the mandrel (26) when the mandrel (26) when is engaged in the EFV (1),
wherein when fluid is delivered under pressure to the mandrel (26), the excess flow valve device (1) become fixed in the service line (38).

9. The installation equipment (20) according to claim 8, wherein the diameter of the EFV housing (10), the mandrel housing (28) and the fluid line (24) are each smaller than that of the service line (38).

10. The installation equipment (20) according to claim 7, wherein the pair of O-rings (36) are spaced apart the distance substantially equal to that between the ends of said second length (8).

11. A method for installing an excess flow valve (1) in a service line (38) of a natural gas distribution system serving an existing structure, wherein the excess flow valve (1) has a passageway for passage of gas therethrough, the excess flow valve (1) being engaged in a through hole (11) of a first length (6) of a cylindrical housing (10), and the cylindrical housing (10) having an expandable tubular wall (14) forming a part of a second length (8) thereof, the expandable tubular wall (14) of the housing (10) being capable of being expanded and fixed within the service line (38), the method comprising
forcing the cylindrical housing (10) with the excess flow valve (1) therewithin into the service line (38) of the natural gas distribution system serving an existing structure; and
causing the expandable tubular wall (14) forming part of the second length (8) of the cylindrical housing (10) to expand so as to firmly frictionally engage the interior wall of the service line (38).

12. The method of claim 11, wherein the expandable tubular wall (14) of the second length (8) of the cylindrical housing (10) is caused to expand by delivering fluid under pressure thereto.

13. The method of claim 11 or claim 12, wherein the cylindrical housing (10) with the excess flow valve (1) therewithin is forced to a position within the service line (38) by use of a mandrel (26).

14. A method according to any one of claims 11-13, wherein the location in the service line (38), into which the cylindrical housing (10) with the excess flow valve (1) therein is delivered, is underground.

15. The method of any one of claims 11-14, wherein the service line has a bend therein and the cylindrical housing (10) with the excess flow valve (1) therewithin is forced around the bend and downstream therefrom to the location at which the expansion takes place.

## Patentansprüche

1. Durchflussbegrenzendes Ventil (excess flow valve - EFV) (1), das dafür eingerichtet ist, in einer Hausanschlussleitung (38) eines Erdgasverteilungssystems eingebaut zu werden, die eine vorhandene Anlage versorgt, wobei das EFV Folgendes umfasst:
ein zylindrisches Gehäuse (10), das einen Abschnitt (2) mit einer ersten Länge (6) und einen Abschnitt (4) mit einer zweiten Länge (8) und ein Durchgangsloch (11), das sich durch dasselbe für einen Durchgang von Gas durch dasselbe erstreckt, hat,
wobei das EFV in dem Durchgangsloch (11) der ersten Länge (6) in Eingriff gebracht ist, **dadurch gekennzeichnet, dass** das EFV ferner Folgendes umfasst:
eine ausdehnbare röhrenförmige Wand (14), die einen Abschnitt der zweiten Länge (8) des zylindrischen Gehäuses (10) bildet,
wobei die ausdehnbare röhrenförmige Wand (14) dafür eingerichtet ist und dazu in der Lage ist, das EFV und das zylindrische Gehäuse (10) innerhalb der Hausanschlussleitung zu verankern, wenn die ausdehnbare röhrenförmige Wand (14) innerhalb der Hausanschlussleitung ausgedehnt worden ist,
wobei das EFV und das zylindrische Gehäuse (10) frei von jeglichem anderen Mittel zum Verankern des zylindrischen Gehäuses (10) innerhalb der Hausanschlussleitung sind,
wobei, wenn die ausdehnbare röhrenförmige Wand (14) in einer ringförmigen Konfiguration in der Hausanschlussleitung ausgedehnt ist, das EFV und das zylindrische Gehäuse (10) in der Hausanschlussleitung befestigt und dauerhaft hinterlassen werden, um, von dem Zeitpunkt des anfänglichen Einbaus des zylindrischen Gehäuses (10) mit dem EFV innerhalb derselben an, die Hausanschlussleitung für den Durchgang von Gas durch dieselbe außer durch das EFV abzudichten.

2. Durchflussbegrenzendes Ventil (1) nach Anspruch 1, wobei die erste Länge (6) und die zweite Länge (8) integral miteinander als eine Einheit geformt sind.

3. Durchflussbegrenzendes Ventil (1) nach Anspruch 1 oder 2, wobei eine ringförmige Wand an jedem Ende der zweiten Länge (8) des EFV-Gehäuses dicker ist als die ausdehnbare Wand zwischen den Enden der zweiten Länge (8) .

4. Durchflussbegrenzendes Ventil (1) nach Anspruch 1, wobei die röhrenförmige Wand aus Metall geformt ist.

5. Durchflussbegrenzendes Ventil (1) nach einem der Ansprüche 1 bis 4, wenn es vor Ort innerhalb der Hausanschlussleitung verwendet wird, wobei die röhrenförmige Wand in der Hausanschlussleitung ausgedehnt ist, wodurch das EFV dazu in der Lage ist, an seinem Platz befestigt und hinterlassen zu werden.

6. Einbau-Ausrüstung (20) zum Befestigen und Hinterlassen eines durchflussbegrenzenden Ventils (1) in einer Hausanschlussleitung (38) eines Erdgasverteilungssystems, die eine vorhandene Anlage versorgt, wobei das durchflussbegrenzende Ventil (1) einen Durchgangsweg für den Durchgang von Gas durch dasselbe hat, wobei das durchflussbegrenzende Ventil (1) in einem Durchgangsloch (11) einer ersten Länge (6) eines zylindrischen Gehäuses (10) in Eingriff gebracht wird und das zylindrische Gehäuse (10) eine ausdehnbare röhrenförmige Wand (14) hat, die einen Teil einer zweiten Länge (8) desselben bildet, wobei die ausdehnbare röhrenförmige Wand (14) des Gehäuses (10) dazu in der Lage ist, innerhalb der Hausanschlussleitung (38) ausgedehnt und befestigt zu werden, **dadurch gekennzeichnet, dass**
die Einbau-Ausrüstung einen Dorn (26), eine Fluidleitung (24) und eine hydraulische Pumpe (22) umfasst, die alle in Eingriff miteinander gebracht werden, um dem Dorn (26) ein Fluid unter Druck zuzuführen.

7. Einbau-Ausrüstung (20) nach Anspruch 6, wobei der Dorn (26) ein zylindrisches Gehäuse (28) einschließt, das mit der Fluidleitung (24) in Eingriff gebracht wird, wobei das Dorngehäuse (28) ein Paar von O-Ringen (36), die jeweils an entgegengesetzten Enden desselben befestigt sind, und ein Fluid-Auslassloch (34), das zwischen den O-Ringen (36) angeordnet ist, hat.

8. Einbau-Ausrüstung (20) nach Anspruch 7, wobei die O-Ringe (36) des Dorns (26) jeweils an jedem Ende der zweiten Länge (8) an der ringförmigen Wand (14) befestigt sind, so dass sie einen Raum zwischen der ausdehnbaren Wand (14) und dem Dorn (26) bilden, wenn der Dorn (26) in dem EFV (1) in Eingriff gebracht ist,
wobei, wenn dem Dorn (26) ein Fluid unter Druck zugeführt wird, das durchflussbegrenzende Ventil (1) in der Hausanschlussleitung (38) befestigt wird.

9. Einbau-Ausrüstung (20) nach Anspruch 8, wobei der Durchmesser des EFV-Gehäuses (10), des Dorngehäuses (28) und der Fluidleitung (24) jeweils kleiner ist als derjenige der Hausanschlussleitung (38).

10. Einbau-Ausrüstung (20) nach Anspruch 7, wobei das Paar von O-Ringen (36) mit einem Abstand entfernt voneinander angeordnet ist, der im Wesentlichen demjenigen zwischen den Enden der zweiten Länge (8) entspricht.

11. Verfahren zum Einbauen eines durchflussbegrenzenden Ventils (1) in einer Hausanschlussleitung (38) eines Erdgasverteilungssystems, die eine vorhandene Anlage versorgt, wobei das durchflussbegrenzende Ventil (1) einen Durchgangsweg für den Durchgang von Gas durch dasselbe hat, wobei das durchflussbegrenzende Ventil (1) in einem Durchgangsloch (11) einer ersten Länge (6) eines zylindrischen Gehäuses (10) in Eingriff gebracht wird und das zylindrische Gehäuse (10) eine ausdehnbare röhrenförmige Wand (14) hat, die einen Teil einer zweiten Länge (8) desselben bildet, wobei die ausdehnbare röhrenförmige Wand (14) des Gehäuses (10) dazu in der Lage ist, innerhalb der Hausanschlussleitung (38) ausgedehnt und befestigt zu werden, wobei das Verfahren Folgendes umfasst:
das Drücken des zylindrischen Gehäuses (10) mit dem durchflussbegrenzenden Ventil (1) in demselben in die Hausanschlussleitung (38) des Erdgasverteilungssystems, die eine vorhandene Anlage versorgt, und
das Veranlassen, dass sich die ausdehnbare röhrenförmige Wand (14), die einen Teil der zweiten Länge (8) des zylindrischen Gehäuses (10) bildet, ausdehnt, so dass sie die Innenwand der Hausanschlussleitung (38) fest reibschlüssig in Eingriff nimmt.

12. Verfahren nach Anspruch 11, wobei die ausdehnbare röhrenförmige Wand (14) der zweiten Länge (8) des zylindrischen Gehäuses (10) durch das Zuführen eines Fluid unter Druck zu derselben dazu veranlasst wird, sich auszudehnen.

13. Verfahren nach Anspruch 11 oder Anspruch 12, wobei das zylindrische Gehäuse (10) mit dem durchflussbegrenzenden Ventil (1) in demselben durch die Verwendung eines Dorns (26) zu einer Position innerhalb der Hausanschlussleitung (38) gedrückt wird.

14. Verfahren nach einem der Ansprüche 11 bis 13, wobei sich die Position in der Hausanschlussleitung (38), in die das zylindrische Gehäuse (10) mit dem durchflussbegrenzenden Ventil (1) in demselben zugeführt wird, unter Tage befindet.

15. Verfahren nach einem der Ansprüche 11 bis 14, wobei die Hausanschlussleitung eine Biegung in derselben hat und das zylindrische Gehäuse (10) mit dem durchflussbegrenzenden Ventil (1) in demselben um die Biegung herum und stromabwärts von derselben zu der Position, an der die Ausdehnung erfolgt, gedrückt wird.

## Revendications

1. Vanne de limitation de débit (EFV) (1) apte à être installée dans une conduite de service (38) d'un système de distribution de gaz naturel desservant une installation existante, ladite EFV comprenant :
un logement cylindrique (10) ayant une partie (2) d'une première longueur (6) et une partie (4) d'une deuxième longueur (8) et un trou traversant (11) s'étendant à travers celui-ci pour le passage du gaz à travers celui-ci ;
l'EFV étant engagée dans ledit trou traversant (11) de ladite première longueur ;
**caractérisée en ce que** ladite EFV comprend en outre :
une paroi tubulaire extensible (14) formant une partie de la deuxième longueur (8) du logement cylindrique (10) ;
dans laquelle la paroi tubulaire extensible (14) est apte à et capable d'ancrer l'EFV et le logement cylindrique (10) à l'intérieur de la conduite de service lorsque la paroi tubulaire extensible (14) a été étendue à l'intérieur de la conduite de service ;
dans laquelle l'EFV et le logement cylindrique (10) sont dépourvus de tout autre moyen pour ancrer le logement cylindrique (10) à l'intérieur de la conduite de service ;
dans laquelle lorsque ladite paroi tubulaire extensible (14) est étendue dans une configuration annulaire dans la conduite de service, l'EFV et le logement cylindrique (10) sont fixés et laissés en permanence dans la conduite de service pour sceller la conduite de service pour le passage du gaz à travers celle-ci sauf à travers l'EFV à partir du temps de l'installation initiale du logement cylindrique (10) avec l'EFV à l'intérieur de celui-ci.

2. Vanne de limitation de débit (1) selon la revendication 1, dans laquelle ladite première longueur (6) et ladite deuxième longueur (8) sont formées ensemble d'un seul tenant.

3. Vanne de limitation de débit (1) selon la revendication 1 ou 2, dans laquelle une paroi annulaire à chaque extrémité de ladite deuxième longueur (8) dudit logement de l'EFV est plus épaisse que la paroi extensible entre les extrémités de ladite deuxième longueur (8).

4. Vanne de limitation de débit (1) selon la revendication 1, dans laquelle ladite paroi tubulaire est en métal.

5. Vanne de limitation de débit (1) selon l'une quelconque des revendications 1 à 4 lorsqu'elle est utilisée in situ à l'intérieur de la conduite de service, avec ladite paroi tubulaire étendue dans la conduite de service de telle manière que l'EFV puisse être fixée et laissée en place.

6. Equipement d'installation (20) pour fixer et laisser un dispositif de vanne de limitation de débit (1) dans une conduite de service (38) d'un système de distribution de gaz naturel desservant une installation existante, dans lequel le dispositif de vanne de limitation de débit (1) comporte une voie de passage pour le passage de gaz à travers celle-ci, la vanne de limitation de débit (1) étant engagée dans un trou traversant (11) d'une première longueur (6) d'un logement cylindrique (10), et le logement cylindrique (10) ayant une paroi tubulaire extensible (14) formant une partie d'une deuxième longueur (8) de celui-ci, la paroi tubulaire extensible (14) du logement (10) étant capable d'être étendue et fixée à l'intérieur de la conduite de service (38), **caractérisé en ce que**
l'équipement d'installation comprend un mandrin (26), une conduite de fluide (24) et une pompe hydraulique (22) qui sont tous engagés ensemble pour délivrer du fluide sous pression au dit mandrin (26).

7. Equipement d'installation (20) selon la revendication 6, dans lequel le mandrin (26) comprend un logement cylindrique (28) engagé dans ladite conduite de fluide (24), ledit logement de mandrin (28) ayant une paire de joints toriques (36) respectivement fixés à des extrémités opposées de celui-ci et un trou de sortie de fluide (34) situé entre les joints toriques (36).

8. Equipement d'installation (20) selon la revendication 7, dans lequel lesdits joints toriques (36) du mandrin (26) sont respectivement fixés contre la paroi annulaire (14) à chaque extrémité de la deuxième longueur (8) de manière à former un espace entre la paroi extensible (14) et le mandrin (26) lorsque le mandrin (26) est engagé dans l'EFV (1),
dans lequel lorsque le fluide est délivré sous pression au mandrin (26), le dispositif de vanne de limitation de débit (1) devient fixé dans la conduite de service (38).

9. Equipement d'installation (20) selon la revendication 8, dans lequel le diamètre du logement d'EFV (10), le diamètre du logement de mandrin (28) et le diamètre de la conduite de fluide (24) sont inférieurs au diamètre de la conduite de service (38).

10. Equipement d'installation (20) selon la revendication 7, dans lequel la paire de joints toriques (36) sont espacés d'une distance sensiblement égale à celle entre les extrémités de ladite deuxième longueur (8).

11. Procédé d'installation d'une vanne de limitation de débit (1) dans une conduite de service (38) d'un système de distribution de gaz naturel servant de structure existante, dans lequel la vanne de limitation de débit (1) comporte une voie de passage pour le passage d'un gaz à travers celle-ci, la vanne de limitation de débit (1) étant engagée dans un trou traversant (11) d'une première longueur (6) d'un logement cylindrique (10), et le logement cylindrique (10) ayant une paroi tubulaire extensible (14) formant une partie d'une deuxième longueur (8) de celui-ci, la paroi tubulaire extensible (14) du logement (10) étant capable d'être étendue et fixée à l'intérieur de la conduite de service (38), le procédé comprenant les étapes consistant à :
forcer le logement cylindrique (10) avec la vanne de limitation de débit (1) à l'intérieur de celui-ci dans la conduite de service (38) du système de distribution de gaz naturel desservant une structure existante ; et
amener la paroi tubulaire extensible (14) formant une partie de la deuxième longueur (8) du logement cylindrique (10) à s'étendre de manière à s'engager fermement par frottement avec la paroi intérieure de la conduite de service (38).

12. Procédé selon la revendication 11, dans lequel la paroi tubulaire extensible (14) de la deuxième longueur (8) du logement cylindrique (10) est amenée à s'étendre en délivrant le fluide sous pression à celui-ci.

13. Procédé selon la revendication 11 ou 12, dans lequel le logement cylindrique (10) avec la vanne de limitation de débit (1) à l'intérieur de celui-ci est forcé à une position à l'intérieur de la conduite de service (38) par l'utilisation d'un mandrin (26).

14. Procédé selon l'une quelconque des revendications 11 à 13, dans lequel l'emplacement dans la conduite de service (38), auquel le logement cylindrique (10) avec la vanne de limitation de débit (1) à l'intérieur de celui-ci est fourni, est souterrain.

15. Procédé selon l'une quelconque des revendications 11 à 14, dans lequel la conduite de service comporte une courbure à l'intérieur de celle-ci et le logement cylindrique (10) avec la vanne de limitation de débit (1) à l'intérieur de celui-ci est forcé autour de la courbure et en aval de celle-ci à l'emplacement auquel l'extension intervient.
